# EUROPÄISCHE PATENTSCHRIFT

(11) **EP 2 726 329 B1**
(45) Veröffentlichungstag und Bekanntmachung des Hinweises auf die Patenterteilung: **09.08.2017**
(21) Anmeldenummer: 12729003.9
(22) Anmeldetag: 18.06.2012
(51) Int. Cl.: B60R 21/0132, B60R 21/0134, B60R 21/013, B60K 28/02, B60K 28/06

(54) **VERFAHREN ZUM STEUERN EINES REVERSIBLEN GURTSTRAFFERS EINES SICHERHEITSGURTS IN EINEM KRAFTFAHRZEUG**
METHOD FOR CONTROLLING A REVERSIBLE BELT TENSIONER OF A SAFETY BELT IN A MOTOR VEHICLE
PROCÉDÉ DE COMMANDE D'UN TENDEUR RÉVERSIBLE DE CEINTURE DE SÉCURITÉ DANS UN VÉHICULE AUTOMOBILE

(30) Priorität: 01.07.2011 DE 102011106247
(43) Veröffentlichungstag der Anmeldung: 07.05.2014
(73) Patentinhaber: Audi AG, 85045 Ingolstadt (DE); Automotive Safety Technologies GmbH, 85080 Gaimersheim (DE)
(72) Erfinder: ERLACHER, Markus, 85122 Hitzhofen (DE); BOTSCH, Michael, 85057 Ingolstadt (DE); BERGER, Chrsitian, 41726 Göteborg (SE); KRÜGER, Torsten, 85055 Ingolstadt (DE)
(74) Vertreter: Thielmann, Frank
(86) Internationale Anmeldenummer: PCT/EP2012/002563
(87) Internationale Veröffentlichungsnummer: WO 2013/004342

(56) Entgegenhaltungen:
- EP-A1- 1 747 943
- DE-A1-102005 035 850
- DE-A1-102005 035 862
- DE-A1-102006 045 454
- DE-A1-102008 042 342
- DE-A1-102009 049 195

## Beschreibung

Die vorliegende Erfindung betrifft ein Verfahren zum Steuern eines reversiblen Gurtstraffers eines Sicherheitsgurts in einem Kraftfahrzeug. Über dies betrifft die vorliegende Erfindung ein Fahrerassistenzsystem für ein Kraftfahrzeug. Schließlich betrifft die vorliegende Erfindung ein solches Kraftfahrzeug.

Heutige Kraftfahrzeuge sind mit einem konventionellen Gurtsystem ohne reversiblen Gurtstraffer oder mit einem Gurtsystem mit einem reversiblen Gurtstraffer ausgestattet. Bei Kraftfahrzeugen, die mit einem reversiblen Gurtstraffer ausgestattet sind, wird bei gestecktem Sicherheitsgurt bei Antritt der Fahrt der Sicherheitsgurt gestrafft und die so genannte Gurtlose entnommen. Während der Fahrt kann allerdings durch eine Bewegung des Fahrers bzw. der Fahrzeuginsassen oder in Folge eines entsprechenden Fahrmanövers wieder eine Gurtlose in das jeweilige Gurtsystem eingebracht werden. Somit ist der Sicherheitsgurt nicht mehr ausreichend gestrafft und die Sicherheit des Fahrers oder der anderen Fahrzeuginsassen ist nicht mehr im vollen Umfang gewährt.

Die DE 10 2005 035 850 A1 betrifft ein Verfahren zur Steuerung eines reversiblen Gurtstraffers in einem Kraftfahrzeug, bei dem der zeitliche Verlauf eines die Fahrzeugdynamik charakterisierenden Messwerts bestimmt wird und ein Gradient von diesem Messwert berechnet wird. Wenn der Gradient des Messwerts einen vorbestimmten Grenzwert überschreitet, wird der Gurtstraffer aktiviert.

Die DE 10 2005 035 863 A1 beschreibt ein Verfahren zum Steuern eines reversiblen Gurtstraffers in einem Kraftfahrzeug. Hierbei wird der Gurtstraffer aktiviert, sodass ein Sicherheitsgurt von einer Normalstellung in eine zweite Stellung gebracht wird, in der der Sicherheitsgurt stärker als in der Normalstellung gestrafft ist. Das Aktivieren des Gurtstraffers erfolgt hierbei unanhängig von einer Gefahrensituation.

Aus der DE 10 2008 050 316 A1 ist ein Verfahren zur dynamischen Fixierung eines mit einem Sicherheitsgurt in einem Sitz eines Fahrzeugs angeschnallten Fahrzeuginsassen bekannt. Hierbei wird mit mindestens einem Sensor eine Querdynamik des Fahrzeugs bestimmt. Dabei wird eine Gurtlose des Sicherheitsgurts mittels eines Gurtaufrollers dann zumindest partiell aufgerollt, wenn ein oberer Schwellwert der Querdynamik überschritten wird und ein Kurvenradius eines voraus liegenden Straßenverlaufs konstant bleibt oder sich verringert.

Die DE 10 2009 049 195 A1 beschreibt ein Verfahren für die fahrdynamische Adaption einer Insassenfixierung, welche durch eine Aktivierung eines Gurtsystems oder eines Fahrzeugsitzes erfolgt. Der Zeitpunkt für die Aktivierung wird unter Berücksichtigung von Informationen über einen künftigen Straßenverlauf und einer aktuellen Fahrzeugposition bestimmt. Zudem wird die Aktivierung des Gurtsystems von einem Lenkwinkel abhängig gemacht.

Aus der DE 10 2005 035 862 A1 ist ein Verfahren zur Steuerung eines reversiblen Gurtstraffers für ein Kraftfahrzeug bekannt. Dabei wird eine Geschwindigkeit und ein Lenkwinkel des Kraftfahrzeugs erfasst. Anschließend wird eine erwartete Drehrate des Kraftfahrzeugs um dessen Vertikalachse berechnet. Des Weiteren wird ein oberer und ein unterer Drehratengrenzwert festgelegt, anhand derer der Gurtstraffer aktiviert wird.

Des Weiteren beschreibt die DE 10 2006 045 454 A1 eine Vorrichtung zum Warnen einer ein Kraftfahrzeug steuernden Person. Die Vorrichtung weist eine Vorrichtung zum Überwachen der Aufmerksamkeit einer ein Kraftfahrzeug steuernden Person, einen Gurtstraffer zum Straffen eines Sicherheitsgurtes für die das Fahrzeug steuernde Person und eine Vorrichtung zum Aktivieren des Gurtstraffers auf. Dabei wird der Gurtstraffer aktiviert, wenn die das Kraftfahrzeug steuernden Person unaufmerksam ist.

Zudem beschreibt die DE 10 2008 042 342 A1 ein Verfahren zur Beurteilung der Aufmerksamkeit eines Fahrers eines Fahrzeugs. Dabei wird anhand von Vergleichswerten, die in Abhängigkeit von einer Lenkinformation, einer Gaspedalinformation und/oder der Geschwindigkeit des Kraftfahrzeugs ermittelt werden, die Aufmerksamkeit des Fahrer beurteilt.

Aus der DE 10 2008 007 149 A1 ist ein Verfahren zum Erzeugen, Steuern und Auslösen eines Warnsignals in einem Kraftfahrzeug bekannt. Hierbei wird eine Aufmerksamkeitsgröße des Fahrers mittels einer Analyse des Lidschlags des Fahrers bestimmt. In Abhängigkeit von der Aufmerksamkeit wird ein entsprechendes Warnsignal, beispielsweise durch Aktivieren des Gurtstraffers, ausgegeben.

Schließlich werden in modernen Kraftfahrzeugen Systeme verwendet, in denen mittels einer Kamera das Gesichtsfeld des Fahrers überwacht wird. Wenn beispielsweise der Fahrer seinen Blick von der Fahrbahn abwendet und von dem Fahrerassistenzsystem ein entsprechendes Hindernis auf der Fahrbahn erkannt wird, wird der Fahrer optisch oder akustisch gewarnt. Durch den Einbau solcher Systeme entstehen allerdings zusätzliche Kosten.

Die Aufgabe der vorliegenden Erfindung ist es, ein Verfahren zum Steuern eines reversiblen Gurtstraffers der eingangs genannten Art zu schaffen, mit dem ein Gurtstraffer eines Sicherheitsgurts in einem Kraftfahrzeug besonders sicher und effektiv angesteuert werden kann. Zudem soll ein entsprechendes Fahrerassistenzsystem bereit gestellt werden.

Diese Aufgabe wird erfindungsgemäß gelöst durch ein Verfahren zum Steuern eines reversiblen Gurtstraffers eines Sicherheitsgurts in einem Kraftfahrzeug durch
- Erfassen eines zeitlichen Verlaufs zumindest einer Zustandsgröße und/oder zumindest einer Umfeldgröße eines Kraftfahrzeugs,
- Erkennen eines vorbestimmten Fahrmanövers und/oder eines die Aufmerksamkeit eines Fahrers charakterisierenden Werts anhand des zeitlichen Verlaufs der zumindest einen erfassten Zustandsgröße und/oder Umfeldgröße, und
- Ansteuern des reversiblen Gurtstraffers in Abhängigkeit von dem erkannten Fahrmanöver bzw. in Abhängigkeit von dem erkannten, die Aufmerksamkeit des Fahrers charakterisierenden Wert, wobei
- das vorbestimmte Fahrmanöver ein Übergang von einer Rückwärtsfahrt zu einer Vorwärtsfahrt ist und der Gurtstraffer bei einem Beginn der Vorwärtsfahrt zum Straffen des Sicherheitsgurts angesteuert wird.

Anhand des zeitlichen Verlaufs einer Zustandsgröße und/oder einer Umfeldgröße des Kraftfahrzeugs wird ein zuvor bestimmtes Fahrmanöver erkannt, welches der Fahrer durchführt. Unter Zustandsgröße kann im Folgenden die Geschwindigkeit, die Beschleunigung, die Querbeschleunigung, die Gierrate, die Fahrtrichtung oder dergleichen verstanden werden. Unter Umfeldgröße sind bevorzugt diejenigen Größen zu verstehen, die mit vorausschauenden Umfeldsensoren erfasst werden. Beispiele hierfür sind der Straßenverlauf, der Abstand zu einem Hindernis oder anderen Fahrzeugen oder die Erkennung von entsprechenden Fahrbahnmarkierungen oder Verkehrszeichen. Aus dem zeitlichen Verlauf dieser Größen wird ein zuvor bestimmtes Fahrmanöver erkannt und der reversible Gurtstraffer in Abhängigkeit von dem erkannten Fahrmanöver angesteuert. Auf diese Weise kann der reversible Gurtstraffer in Abhängigkeit von dem jeweiligen Fahrmanöver so angesteuert werden, dass die maximale Sicherheit für den Fahrer bzw. die anderen Fahrzeuginsassen garantiert wird. Ebenso kann auch in Abhängigkeit von dem jeweiligen Fahrmanöver der Zeitpunkt bestimmt werden, zudem der reversible Gurtstraffer angesteuert wird und folglich der Sicherheitsgurt gestrafft wird.

Anhand des zeitlichen Verlaufs der zumindest einen Zustandsgröße und/oder Umfeldgröße des Kraftfahrzeugs kann ebenso ein die Aufmerksamkeit des Fahrers charakterisierender Wert bestimmt werden. Dieser Wert kann ebenso dazu genutzt werden, um eine Aussage über die Müdigkeit des Fahrers zu treffen. Aus den Zustandsgrößen des Kraftfahrzeugs kann beispielsweise ermittelt werden, in welchen zeitlichen Abständen Fahrbefehle von dem Fahrer abgegeben werden. Ebenso kann anhand von den Zustandsgrößen und/oder Umfeldgrößen bestimmt werden, wie schnell der Fahrer selbst auf eine Umgebung des Kraftfahrzeugs reagiert. Aus diesen Größen kann auf die Aufmerksamkeit des Fahrers rückgeschlossen werden, wobei der Fahrer selbst, beispielsweise durch entsprechende optische Systeme, nicht überwacht werden muss und bekannte im Fahrzeug vorhandene Sensoren genutzt werden können. Hierbei können ebenso anhand der erfassten Zustands- und/oder Umfeldgrößen mehrere Aufmerksamkeitsstufen des Fahrers festgelegt werden. In Abhängigkeit von der Aufmerksamkeit des Fahrers kann der Gurtstraffer entsprechend angesteuert werden.

Das vorbestimmte Fahrmanöver ist ein Übergang von einer Rückwärtsfahrt zu einer Vorwärtsfahrt und der Gurtstraffer wird bei einem Beginn der Vorwärtsfahrt zum Straffen des Sicherheitsgurts angesteuert. Während einer Rückwärtsfahrt verlässt sich der Fahrer nicht nur auf die vorhandenen Seiten- und Rückspiegel sowie auf etwaige vorhandene akustische oder visuelle Warnsysteme, sondern wendet üblicherweise seinen Oberkörper in Richtung Beifahrersitz, um eine verbesserte Sicht durch die Heckscheibe zu erhalten. Ist der Fahrer angeschnallt, bewirkt er durch diese Bewegung, dass eine Gurtlose in den Sicherheitsgurt eingebracht wird. Nach dem Abschluss der Rückwärtsfahrt und bei Wiederaufnahme der Vorwärtsfahrt könnte der Sicherheitsgurt daher nicht ausreichend gestrafft sein. Daher wird bei Beginn der Vorwärtsfahrt der reversible Gurtstraffer entsprechend angesteuert, sodass der Sicherheitsgurt gestrafft ist. Die Konditionierung des Fahrers im Fahrersitz wird somit verbessert und passive Sicherheitssysteme können im Falle einer Gefahrensituation effektiver ihre Wirkung entfalten.

Bevorzugt wird der Fahrer durch eine durch die Ansteuerung des Gurtstraffers erzeugte Straffung des Sicherheitsgurtes gewarnt, sobald der die Aufmerksamkeit des Fahrers charakterisierende Wert einen vorgegebenen Schwellwert überschreitet oder unterschreitet. Durch den zeitlichen Verlauf der Zustandsgrößen und/oder der Umfeldgrößen des Kraftfahrzeugs kann ein Wert bestimmt werden, der die Aufmerksamkeit des Fahrers charakterisiert. Mit Hilfe dieses Werts kann ebenso eine Aussage über die Müdigkeit des Fahrers getroffen werden. Über- oder unterschreitet dieser Wert einen vorgegebenen Schwellwert, kann der reversible Gurtstraffer entsprechend angesteuert werden, sodass der Sicherheitsgurt gestrafft wird. Auf diese Weise kann der Fahrer durch die Aktivierung des reversiblen Gurtstraffers entsprechend gewarnt werden und somit kann die Aufmerksamkeit des Fahrers erhöht werden.

Diese Warnung wirkt direkt am Körper des Fahrers und ist dadurch direkter und schneller von ihm wahrzunehmen als entsprechende Warnungen, die beispielsweise durch ein akustisches oder optisches Signal erzeugt werden. Insbesondere wenn der Fahrer droht einzuschlafen, bereits eingeschlafen ist oder droht wieder einzuschlafen, kann er durch die Straffung des Sicherheitsgurtes besonders effektiv gewarnt werden. Hierbei können auch anhand der erfassten Zustands- und/oder Umfeldgrößen verschieden eskalierende Stufen der Aufmerksamkeit bzw. Müdigkeit des Fahrers bestimmt werden, in Abhängigkeit derer ein auswählbares Warnprofil angesteuert wird. Hierbei können beispielsweise verschieden Ruckprofile durch das Straffen des Sicherheitsgurts erzeugt werden. Auf diese Weise reduziert sich die Zeitspanne der Unaufmerksamkeit des Fahrers und der Fahrer kann sein Kraftfahrzeug schneller wieder beherrschen. Somit verringert sich die Gefahr für den umgebenden Verkehr und den Fahrer selbst. Falls die Aufmerksamkeit des Fahrers durch die Warnfunktion nicht ausreichend wieder hergestellt werden kann, so können alle reversiblen Gurtstraffer dauerhaft angesteuert werden, um alle Fahrzeuginsassen besonders sicher auf einen möglichen Unfall vorbereiten zu können. Bei dieser Warnfunktion können entsprechende Sensoren verwendet werden, welche üblicherweise im Kraftfahrzeug vorhanden sind. Hierbei müssen beispielsweise keine zusätzlichen Kameras verwendet werden, um den Lidschlag oder die Blickrichtung des Fahrers zu überwachen. Somit entstehen keine zusätzlichen Kosten.

Bevorzugt wird die zumindest eine Zustandsgröße anhand zumindest einer Raddrehzahl, einer Stellung eines Bremspedals, einer Stellung eines Gaspedals, einer Stellung eines Kupplungspedals, eines Lenkradwinkels und/oder eines eingelegten Gangs bestimmt. Die entsprechenden Sensoren zur Bestimmung dieser Parameter des Kraftfahrzeugs sind üblicherweise bereits in dem Kraftfahrzeug vorhanden. Ebenso können die Zustandsgrößen beispielsweise aus dem Motorsteuergerät und/oder aus dem Bremssteuergerät ermittelt werden Die vorhandenen Systeme können daher genutzt werden und es entstehen keine zusätzlichen Kosten.

Bevorzugt wird die zumindest eine Umfeldgröße anhand eines durch eine Kamera erfassten Straßenverlaufs und/oder anhand von Daten eines Navigationssystems von dem Straßenverlauf bestimmt. Vorausschauende Umfeldsensoren sind üblicherweise bereits in Kraftfahrzeugen vorhanden und müssen daher nicht zusätzlich nachgerüstet werden. Alternativ oder zusätzlich zu einer Kamera können andere Umfeldssensoren, wie beispielsweise optische Sensoren, Radarsensoren und/oder Lidarsensoren, verwendet werden.

Des Weiteren wird erfindungsgemäß bereitgestellt ein Fahrerassistenzsystem für ein Kraftfahrzeug mit
- einem Sensor zum Erfassen eines zeitlichen Verlaufs zumindest einer Zustandsgröße und/oder einer Umfeldgröße des Kraftfahrzeugs,
- einem reversiblen Gurtstraffer für einen Sicherheitsgurt, und
- einem Steuergerät, das dazu ausgebildet ist, anhand des zeitlichen Verlaufs der zumindest einen erfassten Zustandsgröße und/oder Umfeldgröße ein vorbestimmtes Fahrmanöver und/oder einen die Aufmerksamkeit eines Fahrers charakterisierenden Werts zu erkennen und den reversiblen Gurtstraffer in Abhängigkeit von dem erkannten Fahrmanöver bzw. dem erkannten, die Aufmerksamkeit des Fahrers charakterisierenden Wert anzusteuern, wobei,
- das Steuergerät dazu ausgebildet ist, als das vorbestimmte Fahrmanöver einen Übergang von einer Rückwärtsfahrt zu einer Vorwärtsfahrt zu erkennen und den Gurtstraffer bei einem Beginn der Vorwärtsfahrt zum Straffen des Sicherheitsgurts anzusteuern.

Schließlich wird erfindungsgemäß bereitgestellt ein Kraftfahrzeug mit einem zuvor beschriebenen Fahrerassistenzsystem. Die in Bezug auf das erfindungsgemäße Verfahren beschriebenen Weiterbildungen lassen sich entsprechend auf das erfindungsgemäße Fahrerassistenzsystem und das erfindungsgemäße Kraftfahrzeug übertragen.

Die vorliegende Erfindung wird nun anhand der beigefügten Zeichnungen näher erläutert. Diese zeigen in:
- Fig. 1: ein Kraftfahrzeug, das entsprechende Sensoren zum Erfassen von Zustandsgrößen des Kraftfährzeugs und eine Steuereinrichtung aufweist,
- Fig. 2: ein Kraftfahrzeug, das entsprechende Sensoren zum Erfassen von Umfeldgrößen des Kraftfahrzeugs und ein Steuergerät aufweist, und
- Fig. 3: ein Kraftfahrzeug, das Zustands- und Umfeldssensoren umfasst, mit denen die zukünftige Position des Kraftfahrzeugs bestimmt werden kann.

Die nachfolgend näher geschilderten Ausführungsbeispiele stellen bevorzugte Ausführungsformen der vorliegenden Erfindung dar.

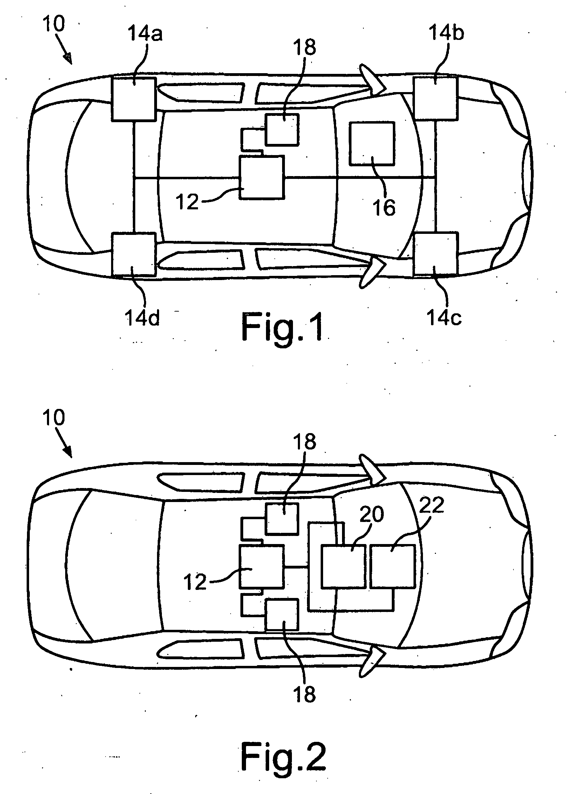

Fig. 1 zeigt ein Kraftfahrzeug 10, das eine Steuereinrichtung 12 aufweist. Die Steuereinrichtung 12 ist über entsprechende Datenleitungen mit den Raddrehzahlsensoren 14a bis 14d der Räder des Kraftfahrzeugs verbunden. Des Weiteren ist die Steuereinrichtung 12 mit einem Lenkwinkelsensor 16 verbunden, der mit der Lenkung des Kraftfahrzeugs in Wirkverbindung steht. Die Steuereinheit 12 ist dazu ausgebildet, anhand der Daten der Raddrehzahlsensoren 14a bis 14d und anhand der Daten des Lenkwinkelsensors 16 zumindest eine Zustandsgröße des Kraftfahrzeugs 10 zu bestimmen. Eine solche Zustandsgröße kann beispielsweise die Geschwindigkeit, die Beschleunigung, die Fahrtrichtung oder dergleichen sein. Das Kraftfahrzeug kann über weitere hier nicht dargestellte Sensoren verfügen, mit denen weitere Zustandsgrößen des Kraftfahrzeugs 10 bestimmt werden können.

Zudem ist das Steuergerät 12 ist dazu ausgebildet, anhand des zeitlichen Verlaufs der Zustandsgrößen ein vorbestimmtes Fahrmanöver zu erkennen. In Abhängigkeit von diesem Fahrmanöver kann ein Gurtstraffer 18 entsprechend angesteuert werden und somit ein Sicherheitsgurt gestrafft werden. Ein solches vorbestimmtes Fahrmanöver kann ein Ausweichmanöver sein, wobei der Gurtstraffer 18 während des Ausweichmanövers und/oder nach dem Ausweichmanöver zum Straffen des Sicherheitsgurtes angesteuert wird. Ein weiteres Fahrmanöver ist erfindungsgemäß der Übergang von einer Rückwärts- zu einer Vorwärtsfahrt sein, wobei der Gurtstraffer 18 bei einem Beginn der Vorwärtsfahrt angesteuert wird, sodass der Sicherheitsgurt entsprechend gestrafft wird. Bei den genannten Fahrmanövern wird durch die Bewegung des Fahrers eine Gurtlose in das Gurtsystem eingebracht. Üblicherweise ist es vorgesehen, dass die Gurtstraffer 18 für alle sich im Kraftfahrzeug befindlichen Fahrzeuginsassen angesteuert werden.

Fig. 2 zeigt eine weitere Ausführungsform eines Kraftfahrzeugs 10, welches ebenso eine Steuereinheit 12 aufweist. Über dies umfasst das Kraftfahrzeug 10 eine Kamera 20 und ein Navigationssystem 22. Das Steuergerät 12 ist in diesem Fall mit zwei Gurtstraffern 18 gekoppelt. Durch die Kamera 20 und/oder das Navigationssystem 22 können entsprechende Umfelddaten des Kraftfahrzeugs 10 erfasst werden. Anstatt der Kamera 20 können anderen optische Sensoren oder vorausschauende Umfeldsensoren, wie Radar- und/oder Lidarsensoren verwendet werden. Die Steuereinheit 12 ist dazu ausgebildet, aus den Daten der Kamera 20 und des Navigationssystems 22 den zeitlichen Verlauf zumindest einer Umfeldgröße des Kraftfahrzeugs 10 zu bestimmen. Anhand des zeitlichen Verlaufs der Umfeldgröße kann ein vorbestimmtes Fahrmanöver, welches von dem Fahrer des Kraftfahrzeugs 10 durchgeführt wird, ermittelt werden. Ein solches Fahrmanöver kann beispielsweise eine Kurvenfahrt sein, bei der zumindest ein für eine solche Kurvenfahrt vorgegebener Schwellwert für die Umfeldgröße überschritten wird. Ein solches Fahrmanöver kann ebenso eine Anfahrt an eine Straßenkreuzung sein, bei der ein für eine solche Anfahrt an eine Straßenkreuzung vorgegebener Schwellwert für die Umfeldgröße überschritten wird.

Ein entsprechender Umfeldsensor bzw. die Kamera 20 des Kraftfahrzeugs 10 erfasst fortwährend die Fahrbahn. Hierbei werden entsprechende Kurven, Straßenkreuzungen und/oder Abstände zu anderen Fahrzeugen oder Hindernissen an die Steuereinrichtung 12 gemeldet. Die Steuereinrichtung 12 steuert daraufhin schon vor dem entsprechenden Fahrmanöver, beispielsweise einer dynamischen Kurvenfahrt oder einer zu schnell angefahrenen Straßenkreuzung die Gurtstraffer 18 an. Hierbei wird der Gurtstraffer 18 bereist vor und bevorzugt während dem jeweiligen Fahrmanöver angesteuert. Der Sicherheitsgurt bleibt bevorzugt so lange gestrafft, bis das Fahrmanöver durchgeführt ist oder die Geschwindigkeit des Kraftfahrzeugs entsprechend angepasst wurde.

Ebenso kann mit dem Navigationssystem 22 fortlaufend ein prädikativer Streckenverlauf an die Steuereinrichtung gesendet werden. In der Steuereinrichtung 12 wird hierbei ein künstlicher Horizont erzeugt, aus dem die Steuereinrichtung 12 entsprechende Kurven, Straßenkreuzungen oder Abstände zu anderen Fahrzeugen bzw. Hindernissen ermitteln kann. Auch hierbei kann durch die Steuereinrichtung 12 der oder die Gurtstraffer 18 bereits im Voraus angesteuert werden und somit eine Straffung des Sicherheitsgurts bewirkt werden.

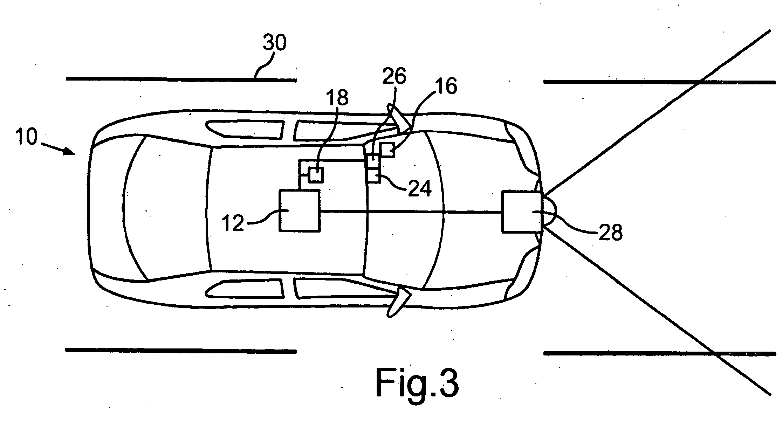

Fig. 3 zeigt ein Kraftfahrzeug 10, welches ebenso eine entsprechende Steuereinrichtung 12 aufweist. Mit der Steuereinrichtung 12 können entsprechende Zustandsgrößen und/oder Umfeldgrößen des Kraftfahrzeugs 10 ermittelt werden. Zu diesem Zweck umfässt das Kraftfahrzeug 10 entsprechende Sensoren, wie sie beispielsweise im Zusammenhang mit den Fig. 1 und Fig. 2 beschrieben sind. Hierbei kann alternativ oder zusätzlich zu den in den Fig. 1 und Fig. 2 beschriebenen Sensoren zusätzlich die Stellung und Veränderung eines Gaspedals, die Stellung und Veränderung eines Bremspedals und/oder eine etwaige Betätigung eines Kupplungspedals erfasst werden. Die Gaspedalstellung kann beispielsweise mit Hilfe eines Motorsteuergeräts 24 erfasst werden, welches mit der Steuereinrichtung 12 verbunden ist. Ebenso kann die Stellung oder Veränderung eines Bremspedals mit einem Bremssteuergerät 26 erfasst werden, welches ebenfalls mit der Steuereinrichtung 12 verbunden ist. Zudem wird, wie bereits im Zusammenhang mit Fig. 1 beschrieben, die Bedienung der Lenkung bzw. die Veränderung des Lenkwinkels erfasst. Des Weiteren kann die Betätigung von entsprechenden Mensch-Maschine-Schnittstellen berücksichtigt werden, welche von dem Fahrer bedient werden.

Durch die erfassten Größen, insbesondere durch den zeitlichen Verlauf der erfassten Zustands- und/oder Umfeldgrößen, kann ein Wert bestimmt werden, der die Aufmerksamkeit des Fahrers charakterisiert. Weitere Merkmale, welche auf eine gesteigerte Unaufmerksamkeit des Fahrers schließen lassen, lassen sich beispielsweise aus einer geöffneten Seitenscheibe, einem aktivierten Gebläse auf hoher Stufe und/oder bei einer niedrigen Temperatur sowie aus einer hohen Lautstärke im Innenraum des Kraftfahrzeugs ableiten. Aus den oben genannten Daten wird ein kontinuierliches Fahrermodell berechnet, das Auskunft über die Fahreraktivität gibt. Auf diese Weise kann ein einstufiger Fahrermodellschätzer bestimmt werden. Ebenso ist es denkbar diesen Fahrermodellschätzer zu einem mehrstufigen Schätzer mit Hilfe der Daten einer potentiellen verfügbaren Fahrspurerkennung sowie eines Objekterkennungssystems 28 zu ergänzen. Zu diesem Zweck werden die Daten der Fahrspurerkennung mit der Lage des Fahrzeugs innerhalb der Fahrspurmarkierung 30 verglichen und eine prädiktive Fahrtrichtung unter Berücksichtigung des Blinkerhebels berechnet und mit der aktuellen und zukünftigen Fahrtrichtung verglichen. Werden darüber hinaus Daten einer objektbasierten Umfeldsensorik berücksichtigt, fließt die Reaktionszeit des Fahrers auf vorausfahrende Fahrzeuge in Abhängigkeit des gewählten Betriebsmodus (z. B. Auto, Dynamik oder Komfort) in das Aufmerksamkeitsmodell mit ein.

Lässt das kontinuierlich berechnete Fahrermodell Rückschlüsse auf eine steigende Unaufmerksamkeit oder Müdigkeit des Fahrers zu, aktiviert die Steuereinrichtung 12 den reversiblen Gurtstraffer 18 und führt damit eine spürbare Straffung des Sicherheitsgurtes durch. Hierbei können verschieden Warnstufen vorgesehen sein, durch die der Fahrer durch einen entsprechenden Ruck am Sicherheitsgurt gewarnt wird. Aufgrund des direkt am Körper des Fahrer anliegenden Sicherheitsgurts kann die Warnung direkt von dem Fahrer wahrgenommen werden und seine Aufmerksamkeit gesteigert werden. Ebenso ist es vorgesehen weitere ansteuerbare Aktoren in dem Kraftfahrzeug zu sehen, mit denen eine akustische und/oder visuelle Warnung oder eine haptische Warnung, beispielsweise ein Vibrieren des Lenkrads, zu erzeugen. Ebenso kann beispielsweise ein entsprechender Eingriff in das Bremssystem erfolgen, welcher einen entsprechenden Ruck bewirkt.

Ein vorbestimmtes Fahrmanöver und/oder ein die Aufmerksamkeit eines Fahrers charakterisierenden Wert kann ebenso mit einer Kombination der in den Fig. 1 bis 3 gezeigten Sensoren zur Erfassung von Zustandsgrößen und/oder Umfeldgrößen des Kraftfahrzeugs ermittelt werden.

## Patentansprüche

1. Verfahren zum Steuern eines reversiblen Gurtstraffers (18) eines Sicherheitsgurts in einem Kraftfahrzeug (10) durch
- Erfassen eines zeitlichen Verlaufs zumindest einer Zustandsgröße,
- Erkennen eines vorbestimmten Fahrmanövers anhand des zeitlichen Verlaufs der zumindest einen erfassten Zustandsgröße, und
- Ansteuern des reversiblen Gurtstraffers (18) in Abhängigkeit von dem erkannten Fahrmanöver,
**dadurch gekennzeichnet, dass**
- das vorbestimmte Fahrmanöver ein Übergang von einer Rückwärtsfahrt zu einer Vorwärtsfahrt ist und der Gurtstraffer (18) bei einem Beginn der Vorwärtsfahrt zum Straffen des Sicherheitsgurts angesteuert wird.

2. Verfahren nach Anspruch 1,
**dadurch gekennzeichnet, dass**
ein zeitlicher Verlauf zumindest einer Umfeldgröße des Kraftfahrzeugs (10) erfasst wird und das vorbestimmte Fahrmanöver zusätzlich anhand des zeitlichen Verlaufs der zumindest einen Umfeldgröße erkannt wird.

3. Verfahren nach Anspruch 2,
**dadurch gekennzeichnet, dass**
anhand des zeitlichen Verlaufs der zumindest einen erfassten Zustandsgröße und/oder der zumindest einen Umfeldgröße des Kraftfahrzeugs (10) ein eine Aufmerksamkeit des Fahrers charakterisierender Wert erkannt wird und der reversible Gurtstraffer (18) in Abhängigkeit von dem erkannten, die Aufmerksamkeit des Fahrers charakterisierenden Wert angesteuert wird.

4. Verfahren nach Anspruch 3,
**dadurch gekennzeichnet, dass**
der Fahrer durch eine durch die Ansteuerung des Gurtstraffers (18) erzeugte Straffung des Sicherheitsgurtes gewarnt wird, sobald der die Aufmerksamkeit des Fahrers charakterisierende Wert einen vorgegebenen Schwellwert überschreitet oder unterschreitet.

5. Verfahren nach einem der vorhergehenden Ansprüche,
**dadurch gekennzeichnet, dass**
die zumindest eine Zustandsgröße anhand zumindest einer Raddrehzahl, einer Stellung eines Bremspedals, einer Stellung eines Gaspedals, einer Stellung eines Kupplungspedals, eines Lenkradwinkels und/oder eines eingelegten Gangs bestimmt wird.

6. Verfahren nach einem der Ansprüche 2 bis 5,
**dadurch gekennzeichnet, dass**
die zumindest eine Umfeldgröße anhand eines durch eine Kamera erfassten Straßenverlaufs und/oder anhand von Daten eines Navigationssystems von dem Straßenverlauf bestimmt wird.

7. Fahrerassistenzsystem für ein Kraftfahrzeug (10) mit
- einem Sensor (14a, 14b, 14c, 14d, 16, 20, 22, 28) zum Erfassen eines zeitlichen Verlaufs zumindest einer Zustandsgröße des Kraftfahrzeugs (10),
- einem reversiblen Gurtstraffer (18) für einen Sicherheitsgurt, und
- einem Steuergerät (12), das dazu ausgebildet ist, anhand des zeitlichen Verlaufs der zumindest einen erfassten Zustandsgröße ein vorbestimmtes Fahrmanöver zu erkennen und den reversiblen Gurtstraffer in Abhängigkeit von dem erkannten Fahrmanöver anzusteuern,
**dadurch gekennzeichnet, dass**
- das Steuergerät dazu ausgebildet ist, als das vorbestimmte Fahrmanöver einen Übergang von einer Rückwärtsfahrt zu einer Vorwärtsfahrt zu erkennen und den Gurtstraffer (18) bei einem Beginn der Vorwärtsfahrt zum Straffen des Sicherheitsgurts anzusteuern.

8. Kraftfahrzeug (10) mit einem Fahrerassistenzsystem nach Anspruch 7.

## Claims

1. Method for controlling a reversible belt tensioner (18) of a safety belt in a motor vehicle (10) by,
- recording a chronological sequence of at least one state variable,
- detecting a predetermined driving manoeuvre using the chronological sequence of the at least one recorded state variable, and
- triggering the reversible belt tensioner (18) depending on the detected driving manoeuvre,
**characterised in that**
- the predetermined driving manoeuvre is a transition from a reverse drive to a forward drive and the belt tensioner (18) is triggered to tighten the safety belt by a commencement of the forward drive.

2. Method according to claim 1,
**characterised in that**
a chronological sequence of at least one variable of the motor vehicle (10) is recorded and that the predetermined driving manoeuvre is detected additionally by means of the chronological sequence of the at least one variable.

3. Method according to claim 2,
**characterised in that**,
by means of the chronological sequence of the at least one recorded state variable and/or the at least one variable of the motor vehicle (10), a value is detected which characterises an attentiveness of the driver, and the reversible belt tightener (18) is triggered depending on the detected value which characterises the attentiveness of the driver.

4. Method according to claim 3,
**characterised in that**
the driver is warned by a tightening of the safety belt caused by the triggering of the belt tightener (18), as soon as the value which characterises the attentiveness of the driver exceeds or falls below a predetermined level.

5. Method according to one of the preceding claims,
**characterised in that**
the at least one state variable is determined by means of at least a wheel speed, a position of a brake pedal, a position of an accelerator pedal, a position of a clutch pedal, a steering wheel angle and/or a selected gear.

6. Method according to one of claims 2 to 5,
**characterised in that**
the at least one variable is determined by means of a route recorded by a camera and/or by the route according to the data of a navigational system.

7. Driver assistance system for a motor vehicle (10) with
- a sensor (14a, 14b, 14c, 14d, 16, 20, 22, 28) for recording a chronological sequence of at least one state variable of the motor vehicle (10),
- a reversible belt tightener (18) for a safety belt, and
- a control device (12) which is designed to detect a predetermined driving manoeuvre by means of the chronological sequence of the at least one recorded state variable, and to trigger the reversible belt tightener depending on the detected driving manoeuvre,
**characterised in that**
- the control device is designed to recognise as the predetermined driving manoeuvre a transition from a reverse drive to a forward drive and to trigger the belt tightener (18) to tighten the safety belt by a commencement of the forward drive.

8. A motor vehicle (10) with a driver assistance system according to claim 7.

## Revendications

1. Procédé de commande d'un tendeur réversible (18) d'une ceinture de sécurité dans un véhicule automobile (10) par :
- détection d'une variation dans le temps au moins d'une grandeur d'état,
- reconnaissance d'une manoeuvre de conduite prédéterminée sur la base de la variation dans le temps de la au moins une grandeur d'état détectée et
- commande du tendeur de ceinture de sécurité réversible (18) en fonction de la manoeuvre de conduite reconnue,
**caractérisé en ce que** :
- la manoeuvre de conduite prédéterminée est un passage d'une conduite en marche arrière à une conduite en marche avant et le tendeur de ceinture de sécurité (18) est commandé au début de la conduite en marche avant pour tendre la ceinture de sécurité.

2. Procédé selon la revendication 1,
**caractérisé en ce que** :
une variation dans le temps au moins d'une grandeur ambiante du véhicule automobile (10) est détectée et la manoeuvre de conduite prédéterminée est reconnue en plus sur la base de la variation dans le temps de la au moins une grandeur ambiante.

3. Procédé selon la revendication 2,
**caractérisé en ce que** :
sur la base de la variation dans le temps de la au moins une grandeur d'état détectée et/ou de la au moins une grandeur ambiante du véhicule automobile (10), une valeur caractérisant une attention du conducteur est reconnue et le tendeur de ceinture de sécurité réversible (18) est commandé en fonction de la valeur reconnue caractérisant l'attention du conducteur.

4. Procédé selon la revendication 3,
**caractérisé en ce que** :
le conducteur est averti par le raidissement de la ceinture de sécurité produit par la commande du tendeur de ceinture de sécurité (18) aussitôt que la valeur caractérisant l'attention du conducteur passe au-dessus ou au-dessous d'une valeur de seuil prédéterminée.

5. Procédé selon l'une quelconque des revendications précédentes,
**caractérisé en ce que** :
la au moins une grandeur d'état est déterminée sur la base au moins d'une vitesse des roues, d'une position d'une pédale de frein, d'une position d'un accélérateur, d'une position d'une pédale d'embrayage, d'un angle de braquage et/ou d'un rapport de vitesse engagé.

6. Procédé selon l'une quelconque des revendications 2 à 5,
**caractérisé en ce que** :
la au moins une grandeur ambiante est déterminée sur la base d'un tracé de route détecté par une caméra et/ou sur la base de données d'un système de navigation du tracé de route.

7. Système d'assistance au conducteur pour un véhicule automobile (10) comprenant :
- un capteur (14a, 14b, 14c, 14d, 16, 20, 22, 28) pour détecter une variation dans le temps au moins d'une grandeur d'état du véhicule automobile (10),
- un tendeur réversible (18) pour une ceinture de sécurité et
- un appareil de commande (12) qui est conçu pour, sur la base de la variation dans le temps de la au moins une grandeur d'état détectée, reconnaître une manoeuvre de conduite prédéterminée et commander le tendeur de ceinture de sécurité réversible en fonction de la manoeuvre de conduite reconnue,
**caractérisé en ce que** :
- l'appareil de commande est conçu en sorte de reconnaître comme manoeuvre de conduite prédéterminée un passage d'une conduite en marche arrière à une conduite en marche avant et de commander le tendeur de ceinture de sécurité (18) pour qu'il tende la ceinture de sécurité au début de la conduite en marche avant.

8. Véhicule automobile (10) équipé d'un système d'assistance au conducteur selon la revendication 7.
